(19) Europäisches Patentamt
European Patent Office
Office européen des brevets

(11) **EP 1 306 356 B1**

(12) **FASCICULE DE BREVET EUROPEEN**

(45) Date de publication et mention de la délivrance du brevet:
**03.03.2010 Bulletin 2010/09**

(51) Int Cl.:
***C04B 7/32*** *(2006.01)*     ***C04B 28/06*** *(2006.01)*

(21) Numéro de dépôt: **02292533.3**

(22) Date de dépôt: **15.10.2002**

(54) **Clinker sulfoalumineux sans fer et sans chaux libre, son procédé de préparation et son utilisation dans des liants blancs**

Eisen und freier kalkarmer Sulfoaluminatklinker, Verfahren zur Herstellung und Verwendung in weissen Bindemittel

Ironless sulfoaluminous clinker containing no free lime, method for its production and its use in white binders

(84) Etats contractants désignés:
**BE ES FR GR IT**

(30) Priorité: **24.10.2001 FR 0113711**

(43) Date de publication de la demande:
**02.05.2003 Bulletin 2003/18**

(73) Titulaire: **CIMENTS FRANCAIS**
**F-92800 Puteaux (FR)**

(72) Inventeurs:
• **Classen, Bruno**
**78640 Neauphle Le Chateau (FR)**
• **Colombet, Pierre**
**78980 Longnes (FR)**

(74) Mandataire: **Laget, Jean-Loup et al**
**Brema-Loyer**
**161, rue de Courcelles**
**75017 Paris (FR)**

(56) Documents cités:
**US-A- 3 251 701**    **US-A- 3 944 426**
**US-A- 4 957 556**

• **CHEMICAL ABSTRACTS, vol. 98, no. 22, 30 mai 1983 (1983-05-30) Columbus, Ohio, US; abstract no. 184597c, page 310; XP002206769 & JP 57 200252 A (NIHON CEMENT CO) 8 décembre 1982 (1982-12-08)**
• **CHEMICAL ABSTRACTS, vol. 95, no. 4, 27 juillet 1981 (1981-07-27) Columbus, Ohio, US; abstract no. 29220u, page 255; XP002206770 & JP 56 014460 A ( I. IKEDA) 12 février 1981 (1981-02-12)**
• **DATABASE WPI Week 199002 Derwent Publications Ltd., London, GB; AN 1990-010958 XP002206771 & JP 01 290543 A (CHICHIBU CEMENT KK)**

**Description**

La présente invention concerne un nouveau clinker sulfoalumineux, son procédé de préparation et son utilisation dans des liants, en particulier dans des liants faiblement teintés, faiblement colorés ou blancs.

Les liants hydrauliques (incluant les ciments) sont des poudres minérales qui réagissent avec l'eau afin de former une pâte malléable qui durcit après quelques heures. On confond souvent les termes "liant hydraulique" et "ciment". De façon générale les liants hydrauliques sont composés de ciments et d'additifs minéraux. La fabrication du ciment consiste à cuire un cru, composé des matériaux appropriés dans un four rotatif, à haute température (supérieure à 1.450˚ C). Les nodules obtenus après la cuisson, appelés nodules de clinker, sont broyés à une finesse adéquate (ou surface spécifique) afin d'activer l'affinité du ciment avec l'eau. Le ciment est donc un clinker broyé, avec des ajouts minéraux éventuels.

Les ciments sont illustrés de manière classique par deux types de ciments, les ciments Portland et les ciments alumineux.

Pour faciliter les explications, les abréviations standards utilisées dans la suite du texte sont rappelées ci-après :

$$\text{C représente } CaO \qquad \overline{S} \text{ représente } SO_3$$
$$\text{A représente } Al_2O_3 \qquad \text{H représente } H_2O$$
$$\text{S représente } Si_2O_2 \qquad \text{T représente } TiO_2$$
$$\text{F représente } Fe_2O_3$$

Les ciments de type Portland sont composés de quatre phases principales, alite $C_3S$ (40-70 %), bélite $C_2S$ (jusqu'à 30 %), aluminate tricalcique $C_3A$ (2-15 %) et ferrite $C_4AF$ (jusqu'à 15 %). Le gypse est ajouté habituellement (jusqu'à 5 %) pendant le broyage du clinker.

Les ciments de type alumineux couvrent une gamme de liants qui renferment de l'aluminate monocalcique CA en tant que constituant principal. Les autres phases majoritaires de cette gamme de ciments sont la phase ferrite $C_4AF$, et la phase dialuminate de calcium $CA_2$.

Un nouveau type de ciment a été créé durant les années 70. Il est caractérisé par une de ses phases appelée sulfoaluminate de calcium $C_4A_3\overline{S}$ (phase de Klein). Les autres phases sont généralement $C_2S$, $C_4AF$, CA, $CA_2$, $C_{12}A_7$, $C\overline{S}$ et de la chaux libre. Le sulfoaluminate de calcium s'hydrate différemment en fonction des autres phases présentes dans le liant (liant = ciment + addition des minéraux actifs) :

- Si $C_4A_3\overline{S}$ est la seule phase hydraulique réactive, les produits d'hydratation sont le monosulfoaluminate de calcium et l'hydroxyde d'aluminium :

$$C_4A_3\overline{S} + 18H \rightarrow C_4A\overline{\overline{S}}H_{12} + 2AH_3 \qquad (1)$$

Cette réaction commence très lentement et la pâte reste malléable pendant une période de temps assez longue.

- En présence de gypse (ou d'autres phases sulfate de calcium) $C_4A_3\overline{S}$ donne lieu à l'ettringite si le rapport molaire gypse/sulfoaluminate de calcium est supérieur à 2, et donne l'ettringite et le monosulfoaluminate de calcium dans le cas contraire :

$$2C_4A_3\overline{S} + 2C\overline{S}H_2 + 52H \rightarrow C_6A\overline{S}_3H_{32} + C_4A\overline{S}H_{12} + 4AH_3 \qquad (2)$$

$$C_4A_3\overline{S} + 2C\overline{S}H_2 + 34H \rightarrow C_6A\overline{S}_3H_{32} + 2AH_3 \qquad (3)$$

Les réactions (2) et (3) démarrent plus rapidement que la réaction (1), et après leur démarrage, sont assez rapides. En conséquence, les ciments à base de $C_4A_3\overline{S}$ en présence de sulfate de calcium sont des ciments à prise rapide avec une période de malléabilité de plus de 30 minutes. De plus en excès de gypse (rapport molaire de sulfate de calcium/sulfoaluminate de calcium > 2), ils augmentent de volume.

- Les mélanges de $C_4A_3\overline{S}$ et de chaux (oxyde de calcium) donnent lieu à une phase hydraugarnet ($C_3AH_6$) et à une phase Afm ($C_3A.\frac{1}{2}C\overline{S}.\frac{1}{2}CH.xH$) :

$$C_4A_3\overline{S} + 7CH + 2xH \rightarrow C_3AH_6 + 2(C_3A.\tfrac{1}{2}C\overline{S}.\tfrac{1}{2}CH.xH) \qquad (4)$$

- Les mélanges de $C_4A_3\overline{S}$, de chaux et de sulfate de calcium s'hydratent très rapidement pour former l'ettringite :

$$C_4A_3\overline{S} + 8C\overline{S}H_2 + 6C + 80H \rightarrow 3C_6A\overline{S}_3H_{32} \qquad (5)$$

A nouveau ici, des propriétés d'expansion peuvent être obtenues si la chaux et le sulfate de calcium sont en excès.

Les réactions (4) et (5) sont très rapides et conduisent très vite à la prise (c'est-à-dire en quelques minutes) et donnent naissance à des ciments durcissant très rapidement. La chaux peut être présente dans le liant en tant que partie de la composition, ou peut être le résultat de la dissolution d'une autre phase : la phase principale du ciment Portland $C_3S$, une fois en contact avec l'eau, libère de l'hydroxyde de calcium (la forme hydratée de la chaux) qui à son tour accélère la formation d'hydrates selon les réactions (4) ou (5).

En conséquence les cinétiques d'hydratation de $C_4A_3\overline{S}$ dépendent largement des phases présentes dans le liant. Ceci conduit à différentes applications selon que l'on souhaite obtenir un durcissement rapide, une prise rapide et/ou des propriétés d'expansion. Quelques exemples sont cités ci-après :

- Les brevets US 3 251 701, US 3 155 526, US 4 419 136 et US 3 857 714 décrivent des liants expansifs produits à partir d'un clinker renfermant du sulfoaluminate de calcium contenant du clinker qui est mélangé à d'autres constituants (par exemple du gypse et du ciment Portland) afin de produire l'ettringite (réaction (3) ou (5)) avec un excès de gypse et/ou de chaux. Ce clinker ne contenant pas uniquement $C_4A_3\overline{S}$ mais aussi de la chaux et de l'anhydrite a des applications limitées puisque des temps de prise longs (réaction (1)), qui sont requis pour de nombreuses applications, sont impossibles à obtenir.

- Le brevet US 3 860 433 décrit un ciment à très haute résistance, et à prise rapide composé de 20 à 40 % de $C_4A_3\overline{S}$, de 10 à 35 % de $C\overline{S}$, le restant étant essentiellement $C_2S$. Puisque la teneur en $C\overline{S}$ est élevée, le clinker broyé s'hydrate selon les réactions (2) ou (3). L'obtention d'un liant à temps de prise long, tel que la réaction (1) soit favorisée, est impossible.

- Les clinkers ferro- et sulfoalumineux développés par le CBMA (China Building Materials Academy) sont composés principalement de $C_4A_3\overline{S}$, C2S et $C_4AF$ (voir Tableau 1). Ils sont très utiles pour des applications générales et spécifiques telles que la construction en hiver, la fabrication de structures souterraines, la construction marine et les applications à béton renforcé résistant à la corrosion. Cependant leur teneur en $C_4AF$ est toujours supérieure à 3 %. Ce qui leur confère une couleur sombre. Il n'est donc pas intéressant d'incorporer ces clinkers dans des liants devant rester faiblement colorés ou pigmentés, tels que des enduits.

Tableau 1 - Compositions des clinkers ferro- et sulfoalumineux de CBMA

|  | $C_4A_3\overline{S}$ | $C_2S$ | $C_4AF$ |
|---|---|---|---|
| Sulfoalumineux | 50-70 % | 10-25 % | 3-10 % |
| Ferroalumineux | 45-60 % | 10-20 % | 15-25 % |

- Le document WO 90/15033 décrit un clinker cuit entre 1.000 et 1.200° C composé d'une teneur élevée en $C_4A_3\overline{S}$, avec un rapport molaire A/F supérieur à 0,64. Il existe donc une phase ferrite dans ce clinker. La température de cuisson étant très basse, la chaux libre doit être présente de manière substantielle dans le clinker, ce qui empêche son utilisation pour des applications à temps de prise longs.

- Le brevet EP 0 181 739 décrit également un clinker présentant une forte teneur en $C_4A_3\overline{S}$, avec moins de 1 % de chaux libre. Cependant, ce clinker renferme du fer (phase ferrite) ce qui lui confère une couleur sombre (voir plus loin Tableau 7), et d'autres phases telles que $CA_2$, CA et $C_2AS$ en quantités importantes (de l'ordre de 20 %).

"Le brevet JP 57-200252 décrit aussi un clinker à prise rapide renfermant notamment de 19 à 70 % de $C_4A_3\overline{S}$ et une teneur en $C\overline{S}$ inférieure ou égale à 35. Cependant, ce clinker referme également une proportion importante en bélite $C_2S$ (10-65 %) (35 % dans l'exemple présenté), ainsi que du fer $C_4AF$ = 4 % (soit environ 1,3 % en $Fe_2O_3$), ce qui lui confère une couleur sombre."

Il apparaît donc que chaque ciment à base de sulfoaluminate de calcium est adapté à des applications limitées. Le fabricant doit donc présenter aux utilisateurs une gamme de clinkers sulfoalumineux de différents types pour convenir aux diverses applications souhaitées (à temps de prise court ou long, expansif, à durcissement rapide, à résistance élevée...).

Un premier objet de l'invention est donc de proposer un clinker sulfoalumineux unique, qui permette, en le combinant avec du sulfate de calcium et/ou du ciment Portland dans des proportions appropriées, d'obtenir des liants présentant les propriétés souhaitées, notamment en termes de retrait/expansion, temps de prise, durcissement et résistance mécanique.

Un autre objet de l'invention est de proposer un clinker sulfoalumineux de couleur claire, voire quasiment blanc, c'est-à-dire dans lequel les oxydes de fer ou les autres oxydes colorés tels que par exemple l'oxyde de chrome, de manganèse, sont pratiquement absents.

Ces buts sont atteints par le clinker sulfoalumineux selon l'invention, renfermant

- plus de 55 % en poids de phase sulfoaluminate de calcium ($C_4A_3\overline{S}$)

- plus de 10 % en poids de phase bélite ($C_2S$)

- moins de 10 % en poids d'anhydrite ($C\overline{S}$ )

et ne renfermant pratiquement pas de phase ferrite, ni de phase gehlénite ($C_2AS$), ni de chaux libre.

Avec ce clinker pratiquement blanc (voir plus loin le Tableau 7), il est possible de fabriquer des liants très clairs, ou des liants plus colorés ou sombres, en ajoutant simplement un agent colorant, ce qui est impossible avec des clinkers de couleur sombre.

Le clinker suivant l'invention ne contenant pratiquement pas de chaux libre, son utilisation n'est pas limitée aux applications où une prise rapide est nécessaire. En effet, en présence de chaux libre, les réactions (4) et (5) ne peuvent pas être évitées. Ainsi la réaction (1) est favorisée, ce qui permet au ciment de prendre lentement, propriété généralement requise dans de nombreuses applications.

Une faible teneur en anhydrite (< 10 %) permet à l'utilisateur de choisir par exemple, entre la réaction (1) et les réactions (2) et (3) ou entre la réaction (4) et la réaction (5) comme réaction prédominante. Ainsi, l'utilisateur peut contrôler le phénomène d'expansion ou de retrait, qui dépend principalement du rapport molaire sulfate de calcium/ sulfoaluminate de calcium ($C\overline{S}/C_4A_3\overline{S}$ ).

De plus, si la teneur en anhydrite est supérieure à 10 %, la réaction (1) n'est jamais prédominante, et on ne peut jamais obtenir des liants à prise lente avec ce clinker.

Une teneur élevée en $C_4A_3\overline{S}$ (> 55 % en poids) selon l'invention élargit la gamme des propriétés de ce clinker lors de son utilisation dans un liant. En effet, d'une part le rapport $C\overline{S}/C_4A_3$ S peut être ajusté plus facilement si la teneur en $C_4A_3\overline{S}$ est élevée, ce qui permet à l'utilisateur un meilleur contrôle du phénomène expansion/retrait. D'autre part, des tests ont montré que la teneur en $C_4A_3\overline{S}$ dans le clinker doit être supérieure à 55 % pour obtenir des liants (composés dudit clinker, de ciment Portland, et/ou de sulfate de calcium) avec des propriétés de prise et durcissement très rapides suivant la réaction (5).

Par exemple, un mélange de 30 % d'un clinker sulfoalumineux avec 60 % de ciment Portland et 10 % de gypse ne conduit pas à un temps de prise très court (inférieur à 10 minutes) si la teneur en $C_4A_3\overline{S}$ du clinker est inférieure à 55 %.

Il est apparu que la présence de bélite ($C_2S$) dans le clinker est tout à fait bénéfique. D'une part, cette phase piège la chaux et il est donc plus facile d'obtenir un clinker sans chaux libre lorsque le cru contient de la silice. D'autre part, la bélite s'hydrate très lentement et est donc responsable des performances mécaniques élevées à long terme.

De manière avantageuse, le clinker sulfoalumineux selon l'invention renferme :

- de 55 % à 72 % environ en poids de phase sulfoaluminate de calcium ($C_4A_3\overline{S}$)

- de 10 % à 20 % environ en poids de phase bélite ($C_2S$)

- de 2 % à 9 % environ en poids d'anhydrite ($C\overline{S}$).

De préférence, il renferme moins de 5 % en poids de phase gehlénite ($C_2AS$). En deçà de cette valeur de 5 % la phase gehlénite n'est pratiquement pas détectable par les méthodes actuelles de détection par diffraction X. De préférence, il renferme une teneur en chaux libre inférieure à 0,2 % avantageusement inférieure à 0,15 %, voire même inférieure à 0,10 % en poids environ, et une teneur en fer (exprimée en $Fe_2O_3$) inférieure à 0,3 %, avantageusement 0,25 %, voire même inférieure à 0,20 % en poids environ.

Pour obtenir une couleur la plus claire possible, la teneur totale en oxydes colorés autres que l'oxyde de fer, du clinker est de préférence inférieure à 0,7 % avantageusement inférieure à 0,5 % en poids environ (à savoir, en particulier une teneur inférieure à 0,5 % avantageusement inférieure à 0,3 % en $TiO_2$, inférieure à 0,1 % en MnO, inférieure à 0,05 % en $Cr_2O_3$...).

La présente invention concerne également un procédé de préparation dudit clinker sulfoalumineux

La préparation de clinker sulfoalumineux renfermant plus de 55 % de $C_4A_3\overline{S}$ et pratiquement pas de chaux libre, et ceci à partir d'un cru ne contenant pas de $Fe_2O_3$ n'est pas aisée.

En effet, il serait souhaitable d'augmenter la température de cuisson afin de combiner la totalité de la chaux pendant un temps raisonnable, mais la phase bélite risque de se décomposer pour donner la gehlénite.

A des températures plus faibles, la décomposition de la sulfospurrite pour former la bélite est facilitée par la présence d'oxydes de fer, abaissant la température de décomposition de la sulfospurrite $C_5S_2\overline{S}$ à 1.230˚ C. Ainsi le fer facilite la cuisson des clinkers sulfoalumineux. Mais la présence d'oxydes de fer dans le clinker de l'invention est précisément ce que les inventeurs ont souhaité éviter.

Il a cependant été découvert que le clinker sulfoalumineux selon l'invention pouvait être préparé par un procédé comprenant :

-    le mélange de matières premières, par exemple du calcaire, de la bauxite, du sable et du gypse, en concentrations telles que les proportions pondérales suivantes en oxydes soient respectées :

   -    $4 \leq S \leq 10$

   -    $34 \leq A \leq 49$

   -    $37 \leq C \leq 45$

   -    autres oxydes $\leq 2$

   -    le complément à 100 étant $\overline{S}$

-    puis la cuisson de ce mélange entre 1.250˚ et 1.350˚ C environ, pendant une durée suffisamment longue pour combiner toute la chaux, suivie d'un refroidissement rapide du mélange dans une atmosphère non oxydante.

De manière avantageuse, le mélange vérifie en outre les proportions pondérales en oxydes C, A et S suivantes :

-    $A \leq 1{,}33*S + 41$

-    $A \leq -2{,}33*S + 62$

-    $C \leq 0{,}83*S + 37$

-    $C \geq 3*S + 13$

-    $C \geq -0{,}81*A + 72$

-    $C \leq -0{,}6*A + 67$

Il est essentiel que la température de cuisson soit comprise entre 1.250 et 1.350˚ C. En effet, au-dessous de 1.250˚ C peut se former la sulfospurrite $C_5S_2\overline{S}$, quia de très faibles propriétés hydrauliques. Au-dessus de 1.350˚ C se forme la gehiénite $C_2AS$, qui n'est pas réactive avec l'eau. Entre 1.250 et 1.350˚ C se forme la bélite en tant que phase silicate majoritaire. En outre, à une température supérieure à 1.350˚ C, le sulfate est volatil sous la forme de gaz $SO_2$, qui favorise la décomposition de la phase sulfoaluminate de calcium, et qui est un gaz nocif dont on doit limiter l'émission dans l'environnement.

La durée de la cuisson doit être suffisamment longue pour combiner toute la chaux et pour obtenir un clinker ayant moins de 10 % d'anhydrite. Cette durée dépend des conditions de cuisson, notamment du débit d'air dans le four et de la température de flamme, cependant une durée de 30 minutes à 1 heure est généralement suffisante.

La cuisson est suivie d'un refroidissement rapide. En effet, il est apparu que les conditions de trempe influencent la coloration du clinker selon l'invention. Un refroidissement rapide dans une atmosphère non oxydante, rend le clinker plus faiblement coloré. Le refroidissement peut être effectué par trempe à l'eau, ou sons une atmosphère d'azote.

La dernière étape consiste à broyer le clinker jusqu'à la finesse requise pour activer ses propriétés hydrauliques.

Plus le clinker présente une surface spécifique élevée (mesurée par la méthode de Blaine), meilleure est sa réactivité du point de vue hydraulique. De préférence le clinker est broyé jusqu'à l'obtention d'une surface spécifique Blaine supérieure à 3.000 cm$^2$/g environ, avantageusement supérieure à 5.000 cm$^2$/g environ.

La présente invention concerne également l'utilisation du clinker selon l'invention pour la préparation d'un liant par mélange dudit clinker avec un matériau source d'oxyde de calcium (par exemple du ciment Portland) et/ou avec une source de sulfate de calcium (par exemple du gypse). Selon les proportions de ces trois composants, les liants obtenus peuvent présenter différentes propriétés, par exemple :

- le clinker sulfoalumineux broyé selon l'invention, seul, est un ciment à prise et à durcissement lents (au moins 5 heures) ;

- un liant comprenant de 75 à 90 % de clinker sulfoalumineux selon l'invention, et de 25 à 10 % en poids d'une source de sulfate de calcium présente un temps de prise inférieur ou égal à trois heures et permet de préparer, suivant la norme EN 196, un mortier qui présente une résistance à la compression à 28 jours supérieure ou égale à environ 50 MPa ;

- un liant comprenant de 20 à 40 % (de préférence environ 30 %) de clinker sulfoalumineux selon l'invention, de 50 à 70 % (de préférence environ 60 %) de ciment Portland et de 5 à 25 % (de préférence environ 10 %) d'une source de sulfate de calcium présente un temps de prise inférieur ou égal à 10 minutes, et permet de préparer, suivant la norme EN 196, un mortier qui présente des performances mécaniques élevées à court terme.

- un liant comprenant de 55 à 90 % (de préférence environ 60 %) de clinker sulfoalumineux selon l'invention, de 5 à 30 % (de préférence environ 20 %) de ciment Portland et de 10 à 30 % (de préférence environ 20 %) d'une source de sulfate de calcium présente un temps de prise compris entre 30 minutes et une heure environ, et permet de préparer, suivant la norme EN 196, un mortier présentant une résistance à la compression à 5 heures supérieure à environ 20 MPa.

De manière avantageuse, la source de sulfate de calcium est du gypse.

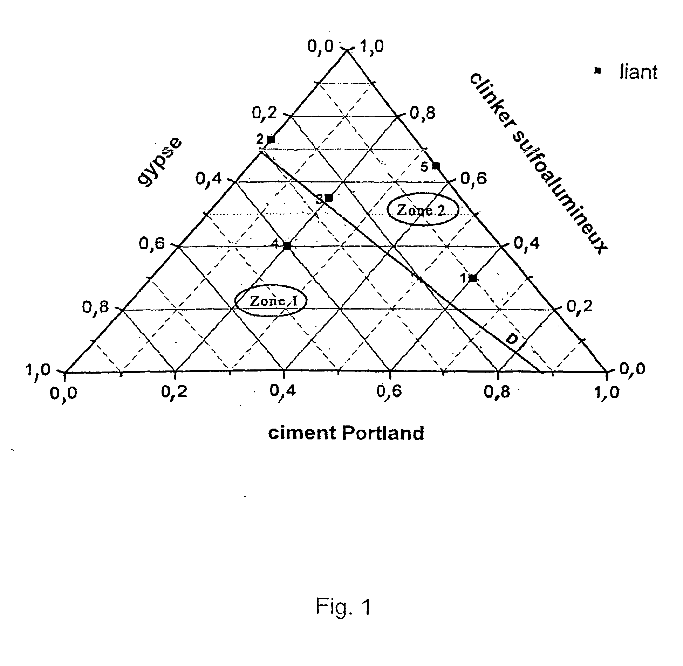

D'autres propriétés du liant, ainsi que d'autres avantages de l'invention sont présentés dans les exemples illustratifs suivants, en association avec la figure 1 qui montre le comportement expansion/retrait d'un liant dans le diagramme ternaire : ciment Portland - clinker sulfoalumineux - gypse.

**EXEMPLES**

Exemple 1 :

Préparation d'un clinker sulfoalumineux selon l'invention et de liants à base de ce clinker.

Un cru constitué de calcaire, de sable, d'alumine blanche et de gypse, selon la composition présentée dans le tableau 2, est cuit à 1.300° C pendant une heure.

Tableau 2 : Composition du cru

| | Calcaire | Sable | Alumine blanche | Gypse | Cru |
|---|---|---|---|---|---|
| % en poids du cru | 43,1 | 4,9 | 19,6 | 32,4 | 100 |
| Perte au feu | 43,43 | 0,14 | 0,63 | 21,39 | 23,10 |
| SiO$_2$ | 0,00 | 98,09 | 0,08 | 0,59 | 4,97 |
| Al$_2$O$_3$ | 0,06 | 0,61 | 98,65 | 0,05 | 32,1 |
| Fe$_2$O$_3$ | 0,04 | 0,06 | 0,09 | 0,01 | 0,05 |
| TiO$_2$ | 0,01 | 0,02 | 0,00 | 0,00 | 0,01 |
| MnO | 0,00 | 0,00 | 0,01 | 0,02 | 0,01 |
| CaO | 55,78 | 0,02 | 0,15 | 33,09 | 30,57 |
| MgO | 0,61 | 0,00 | 0,03 | 0,14 | 0,29 |
| SO$_3$ | 0,00 | 0,00 | 0,07 | 44,89 | 8,79 |

(suite)

|  | Calcaire | Sable | Alumine blanche | Gypse | Cru |
|---|---|---|---|---|---|
| $K_2O$ | 0,01 | 0,42 | 0,00 | 0,00 | 0,03 |
| $Na_2O$ | 0,00 | 0,02 | 0,35 | 0,00 | 0,10 |
| $P_2O_5$ | 0,00 | 0,01 | 0,00 | 0,00 | 0,00 |
| SrO | 0,00 | 0,01 | 0,00 | 0,08 | 0,01 |

L'analyse par diffraction X du clinker montre la présence de $C_4A_3\overline{S}$, $C_2S$, $C\overline{S}$, CA, $CA_2$, de quartz résiduel et de corindon. Aucune phase ferrite, ni gehlénite, ni chaux libre n'ont été détectées. Les analyses chimiques montrent que la composition du clinker obtenu est :

- $C_4A_3\overline{S}$ = 66 %

- $C_2S$ = 15%

- $C\overline{S}$ =3%

- Phases résiduelles = 16 % (CA, $CA_2$, quartz, corindon)

Différents liants ont été préparés avec le clinker sulfoalumineux ci-dessus, en mélange avec du gypse et du ciment Portland blanc. Leurs temps de prise ont été mesurés par texturométrie sur des pâtes et leurs performances mécaniques ont été déterminées sur des mortiers préparés suivant la norme EN 196, à savoir avec du sable siliceux CEN de 0 à 2 mm, un rapport massique eau/liant de 0,5 et un rapport massique liant/sable de 1/3. Les résultats sont présentés dans le tableau 3 ci-après.

Tableau 3 : Composition et performances des liants

| Liant n° | 1 | 2 | 3 | 4 | 5 |
|---|---|---|---|---|---|
| Composition % |  |  |  |  |  |
| - Clinker sulfoalumineux | 100 | 75 | 60 | 70 | 30 |
| - Gypse | / | 25 | 20 | 10 | 10 |
| - Ciment Portland blanc | / | / | 20 | 20 | 60 |
| Temps de prise |  |  |  |  |  |
| - Début | 23 h | 2 h 10 | 30 min | 50 min | 4 min |
| - Fin | 23 h 15 | 3 h | 60 min | 110 min | 6 min |
| Résistance à la compression |  |  |  |  |  |
| (MPa) - à 3 heures | - | - | 4,7 | - | - |
| - à 5 heures | - | - | 24 | 5,2 | 9 |
| - à 1 jour | - | 26 | - | 37 | 18 |
| - à 7 jours | - | 67 | - | - | - |
| - à 28 jours | 50 | 74 | 57 | 45 | 54 |
| (-) = non mesurée |  |  |  |  |  |

On note en particulier la rapidité de prise du liant 5 sans préjudice d'une résistance à la compression élevée à long terme.

Exemple 2 :

Cet exemple a pour but de montrer l'effet de la présence de bélite comparé à celle de la gehlénite sur les performances mécaniques à long terme des clinkers sulfoalumineux de la présente invention.

Le clinker de la présente invention diffère du clinker sulfoalumineux décrit dans le brevet EP-B-0 181 739 par la nature de la phase silicate principale ; EP-B-0 181 739 renferme de la gehlénite $C_2AS$ alors que le clinker de l'invention renferme plus de 10% de bélite (voir tableau 4).

Tableau 4 : Comparaison de la composition minéralogique des clinkers selon l'invention (exemple 1) et selon EP-B-0 181 739

| Constituants | Clinker selon l'invention | Clinker selon EP-B-0 181 739 |
|---|---|---|
| $C_4A_3\overline{S}$ | 66 % | 60% |
| CA, $CA_2$, $C_{12}A_7$ | 15 % | 14 % |
| $C_2S$ (bélite) | 15 % | - |
| $C_2AS$ (gehlénite) | (nd) | 17 % |
| $C\overline{S}$ | 3% | - |
| $C_4AF$ | - | 3 % |
| CT | - | 4 % |
| autres (Ca, Mg, K, Na,...) | 1 % | 2 % |
| (nd = non détectée) | | |

A ces deux clinkers a été ajouté du gypse (10 % en poids) afin d'obtenir un liant présentant un rapport molaire sulfate de calcium sulfoaluminate sensiblement égal à 2 (proportions stoechiométriques selon la réaction (3)).

Les évolutions de la résistance à la compression des deux liants (mesurée sur un mortier préparé suivant la norme EN 196) durant le premier mois ont été comparées (tableau 5).

Tableau 5 : Comparaison de l'évolution de la résistance à la compression

| Age | Clinker selon l'invention | Clinker décrit dans EP-B-0 181 739 |
|---|---|---|
| 1 jour | 28 MPa | 38 MPa |
| 7 jours | 65 MPa | 57 MPa |
| 28 jours | 74 MPa | 58 MPa |

On peut noter que les résistances mécaniques du liant contenant le clinker selon EP-B-0 181 739 n'évoluent pas après 7 jours alors que celles du liant correspondant à la présente invention continuent à augmenter, pour donner une résistance à la compression supérieure de plus de 25 % au bout de quatre semaines.

Exemple 3 :

On a préparé un cru à base de gypse, d'alumine blanche, de calcaire et de calcaire contenant de la silice. La composition de ce cru est présentée dans le tableau 6.

Tableau 6 : Composition du cru

| | Calcaire | Calcaire contenant de la silice | Alumine blanche | Gypse | cru |
|---|---|---|---|---|---|
| % en poids du cru | 17,8 | 29,6 | 30,3 | 29,3 | |
| Perte au feu | 43,29 | 35,10 | 0,63 | 20,30 | 23,05 |
| $SiO_2$ (S) | 0,34 | 19,24 | 0,08 | 1,97 | 6,35 |
| $Al_2O_3$ (A) | 0,08 | 0,47 | 98,65 | 0,37 | 29,43 |
| $Fe_2O_3$ (F) | 0,11 | 0,15 | 0,09 | 0,11 | 0,12 |
| $TiO_2$ | 0,01 | 0,03 | 0,00 | 0,01 | 0,01 |
| MnO | 0,02 | 0,00 | 0,01 | 0,01 | 0,01 |

(suite)

|  | Calcaire | Calcaire contenant de la silice | Alumine blanche | Gypse | cru |
|---|---|---|---|---|---|
| CaO (C) | 55,89 | 44,83 | 0,15 | 33,11 | 30,9 |
| MgO | 0,20 | 0,21 | 0,03 | 1,38 | 0,41 |
| $SO_3$ ($\overline{S}$) | 0,08 | 0,05 | 0,07 | 41,90 | 9,4 |
| $K_2O$ | 0,00 | 0,04 | 0,00 | 0,05 | 0,02 |
| $Na_2O$ | 0,00 | 0,01 | 0,35 | 0,03 | 0,11 |
| $P_2O_5$ | 0,00 | 0,02 | 0,00 | 0,01 | 0,01 |
| SrO | 0,02 | 0,08 | 0,00 | 0,60 | 0,16 |

Ce cru renferme donc les proportions pondérales en oxydes suivantes (%) : S = 8,25 ; A = 38,26 ; F = 0,16 ; C = 40,17 ; $\overline{S}$ = 12,22 ; autres = 0,95.

Ce mélange a été cuit à 1.300˚ C pendant une demi-heure. Puis le clinker a été broyé jusqu'à une surface spécifique Blaine égale à 5.000 $cm^2$/g.

L'analyse par diffraction X du clinker montre qu'il est composé de sulfoaluminate de calcium, de bélite, d'anhydrite et de phases aluminate de calcium (CA, $CA_2$). La présence d'alumine non combinée est également observée. Ni chaux libre, ni phase ferrite n'ont été détectées. La teneur en $C_4A_3\overline{S}$ , $C_2S$, et $C\overline{S}$ est :

- $C_4A_3\overline{S}$ = 57%

- $C_2S$ = 18%

- $C\overline{S}$ = 8 %

- Phases résiduelles = 17 %

L'index de blancheur de l'échantillon est mesuré, selon la norme CIE 1931 sous illuminant C (proche de la lumière naturelle) sous un angle de 45˚. Les caractéristiques de couleurs sont données dans le système L-a-b et sont comparées à celles d'un ciment Portland blanc et à celles d'un clinker sulfoalumineux renfermant du fer (voir tableau 7). La valeur L quantifie la luminance de l'échantillon, alors que a et b décrivent la couleur. Ainsi, les échantillons étudiés sont d'autant plus blancs que L est proche de 100 et que a et b sont proches de zéro.

Tableau 7 : Caractéristiques de couleur de ciments

|  | Clinker sulfoalumineux selon l'invention | Ciment Portland blanc | Clinker sulfoalumineux selon EP-B-0 181 739 (renfermant du fer) |
|---|---|---|---|
| L | 96,22 | 93,65 | 78,1 |
| a | -1,21 | -2,54 | 0,1 |
| b | 2,05 | 4,33 | 15,4 |

Exemple 4 :

Préparation d'autres clinkers selon l'invention.

Trois clinkers ont été préparés à partir de gypse, d'alumine blanche, et de deu calcaires différents : l'un contenant de la silice et l'autre n'en renfermant pas.

Le cru a été cuit à 1.300˚ C pendant 30 minutes. Puis chaque clinker a été broy jusqu'à une surface spécifique Blaine égale à 5.000 $cm^2$/g. Leurs composition minéralogiques (teneur en bélite, anhydrite et sulfoaluminate de calcium) son présentées dans le tableau 8.

Tableau 8 : Composition des clinkers obtenus

| Clinker | $C_2S$ (%) | $C\overline{S}$ (%) | $C_4A_3\overline{S}$ (%) | Phases résiduelles |
|---|---|---|---|---|
| 1 | 11,5 | 4 | 70 | 15,5 |
| 2 | 12,5 | 7 | 61,5 | 19 |
| 3 | 17,5 | 7,5 | 57,5 | 17,5 |

A partir de ces clinkers, deux types de liants ont été préparés :

- liant de type A : liant à prise et durcissement rapides composé de 60 % de ciment Portland, 30 % du clinker sulfoalumineux selon l'invention et 10 % de gypse ;

- liant de type B : liant constitué de chaque clinker et de gypse dans les proportions stoechiométriques selon la réaction (3), qui durcit lentement.

Pour chaque liant A, ont été déterminés le temps de prise (initial et final) et la résistance à la compression après 5 heures d'hydratation, et pour chaque liant B les temps de prise et la résistance à la compression à 28 jours (sur des mortiers préparés suivant la norme EN 196). Les résultats sont présentés dans les tableaux 9 et 10.

Tableau 9 : Liants de type A

| Liant | N° de clinker utilisé | Temps de prise Initial | Final | Résistance à la compression à 5 heures |
|---|---|---|---|---|
| A1 | 1 | 5 min. 30 s | 7 min. | 5,5 MPa |
| A2 | 2 | 8 min. | 10 min. | 6 MPa |
| A3 | 3 | 7 min. | 10 min. | 5 MPa |

Tableau 10 : Liants de type B

| Liant | N° de clinker utilisé | Temps de prise initial | Résistance à la compression à 28 jours |
|---|---|---|---|
| B2 | 2 | 110 min. | 67 MPa |
| B3 | 3 | 110 min. | 63 MPa |

Ainsi, avec chaque clinker, il est possible de fabriquer un liant à prise et durcissement rapides, ainsi qu'un liant à prise lente ayant une bonne résistance à la compression à long terme. En faisant varier la teneur en ciment Portland et en sulfate de calcium du liant, on peut fixer les temps de prise ainsi que le temps de durcissement pour répondre aux exigences de toute application souhaitée. Ce clinker est en quelque sorte un clinker "universel".

Exemple 5 :

Le clinker sulfoalumineux de l'exemple 1 a servi à préparer cinq liants différents afin de tester leurs propriétés de retrait et d'expansion. Les compositions des liants sont présentées dans le tableau 11.

Tableau 11 : Composition des liants (% en poids)

| | Liant 1 | Liant 2 | Liant 3 | Liant 4 | Liant 5 |
|---|---|---|---|---|---|
| Ciment Portland | 60 % | 0% | 20 % | 20 % | 35% |
| Clinker sulfoalumineux | 30 % | 73 % | 55 % | 40 % | 65 % |
| Gypse | 10 % | 27 % | 25% | 40 % | 0% |

Les mortiers hydratés, préparés conformément à la norme EN 196 (rapports pondéraux liant/sable = 0,33 et eau/liant = 0,5) ont été placés sous atmosphère contrôlée (50 % d'humidité relative à 20° C) pour mesurer le retrait ou immergés dans l'eau à 20° C pour mesurer leur expansion. Les résultats sont regroupés dans les tableaux 12 et 13 ci-après.

Tableau 12 : Mesure d'expansion ($\mu$m/m).

| Durée du traitement | Liant 1 | Liant 2 | Liant 3 | Liant 4 | Liant 5 |
|---|---|---|---|---|---|
| 2 jours | 40 | 60 | -30 | 620 | -70 |
| 7 jours | 60 | 50 | -10 | 760 | 10 |
| 28 jours | -20 | 20 | 10 | 820 | |

Tableau 13 : Mesure de retrait ($\mu$m/m)

| Durée du traitement | Liant 1 | Liant 2 | Liant 3 | Liant 4 | Liant 5 |
|---|---|---|---|---|---|
| 2 jours | 60 | 160 | 245 | 105 | 270 |
| 7 jours | 250 | 350 | 315 | 150 | 500 |
| 28 jours | 390 | 510 | 380 | 240 | |

Comme on peut le voir sur la figure 1, des liants ayant des propriétés de faible retrait/expansion sont des compositions proches de la ligne D dans le système ternaire ciment Portland-clinker sulfoalumineux-gypse.

Dans la zone 1, les liants correspondants présentent des propriétés d'expansion (cf. liant 4). Au contraire, dans la zone 2, on observe un retrait notable (cf. liant 5).

Le diagramme ternaire de la figure 1 permet donc :

-    connaissant la composition d'un liant, c'est-à-dire ses proportions en gypse, clinker sulfoalumineux selon l'invention, et ciment Portland, de prévoir son comportement : retrait ou expansion ;

-    ou inversement, en fonction d'un cahier des charges imposant des valeurs limites de retrait ou d'expansion, de choisir la composition appropriée en gypse, clinker sulfoalumineux selon l'invention et ciment Portland du liant à utiliser.

**Revendications**

1.    Clinker sulfoalumineux renfermant :

   - plus de 55 % en poids de phase sulfoaluminate de calcium ($C_4A_3\overline{S}$)
   - de 10 % à 20 % en poids de phase bélite ($C_2S$)
   - moins de 10 % en poids d'anhydrite ($C\overline{S}$)
   - moins de 5 % en poids de phase gehlénite ($C_2AS$),

   une teneur en chaux libre inférieure à 0,2 % en poids et une teneur en fer (exprimée en $Fe_2O_3$) inférieure à 0,3 % en poids.

2.    Clinker sulfoalumineux selon la revendication 1, **caractérisé en ce qu'**il renferme :

   - de 55 % à 72 % en poids de phase sulfoaluminate de calcium ($CaA_3\overline{S}$)
   - de 2 % à 9 % en poids d'anhydrite ($C\overline{S}$).

3.    Clinker selon l'une des revendications 1 ou 2 , **caractérisé en ce que** sa teneur totale en oxydes colorés autres que l'oxyde de fer est inférieure à 0,7 % en poids.

4.    Procédé de préparation du clinker selon l'une quelconque des revendications 1 à 3, comprenant le mélange de matières premières en concentrations telles que les proportions pondérales suivantes en oxydes soient respectées :

$$4 \leq S \leq 10$$

$$34 \leq A \leq 49$$

$$37 \leq C \leq 45$$

$$\text{autres oxydes} \leq 2$$

le complément à 100 étant $\bar{S}$ puis la cuisson de ce mélange entre 1.250° et 1.350° C, pendant une durée suffisamment longue pour combiner toute la chaux, suivie d'un refroidissement rapide du mélange dans une atmosphère non oxydante.

5. Procédé selon la revendication 4, **caractérisé en ce que** le mélange vérifie en outre les proportions pondérales en oxydes C, A et S suivantes :

$$A \leq 1{,}33 * S + 41$$

$$A \leq -2{,}33 * S + 62$$

$$C \leq 0{,}83 * S + 37$$

$$C \geq 3 * S + 13$$

$$C \geq -0{,}81 * A + 72$$

$$C \leq -0{,}6 * A + 67$$

6. Procédé selon la revendication 4 ou 5, **caractérisé en ce que** le refroidissement est effectué par trempe à l'eau.

7. Procédé selon la revendication 4 ou 5, **caractérisé en ce que** le refroidissement est effectué sous une atmosphère d'azote.

8. Procédé selon l'une des revendications 4 à 7, **caractérisé en ce que** le clinker est ensuite broyé jusqu'à l'obtention d'une surface spécifique Blaine supérieure à 3.000 cm$^2$/g.

9. Procédé selon la revendication 8, **caractérisé en ce que** le clinker est broyé jusqu'à l'obtention d'une surface spécifique Blaine supérieure à 5.000 cm$^2$/g.

**10.** Utilisation du clinker selon l'une des revendications 1 à 3 ou obtenu par le procédé selon l'une des revendications 4 à 9, pour la préparation d'un liant par mélange dudit clinker avec un matériau source d'oxyde de calcium et/ou une source de sulfate de calcium.

**11.** Utilisation selon la revendication 10, pour la préparation d'un liant par mélange dudit clinker avec du ciment Portland et/ou une source de sulfate de calcium.

**12.** Liant comprenant de 75 à 90 % de clinker sulfoalumineux selon l'une des revendications 1 à 3 ou obtenu par le procédé selon l'une des revendications 4 à 9, et de 25 à 10 % en poids d'une source de sulfate de calcium, présentant un temps de prise inférieur ou égal à trois heures et permettant de préparer, suivant la norme EN 196, un mortier qui présente une résistance à la compression à 28 jours supérieure ou égale à 50 MPa.

**13.** Liant comprenant de 20 à 40 % de clinker sulfoalumineux selon l'une des revendications 1 à 3, ou obtenu par le procédé selon l'une des revendications 4 à 9, de 50 à 70 % de ciment Portland et de 5 à 25 % d'une source de sulfate de calcium, présentant un temps de prise inférieur ou égal à 10 minutes.

**14.** Liant selon la revendication 13 comprenant 30 % de clinker sulfoalumineux, 60 % de ciment Portland et 10 % d'une source de sulfate de calcium.

**15.** Liant comprenant de 55 à 90 % de clinker sulfoalumineux selon l'une des revendications 1 à 3, ou obtenu par le procédé selon l'une des revendications 4 à 9, de 5 à 30 % de ciment Portland et de 10 à 30 % d'une source de sulfate de calcium, présentant un temps de prise compris entre 30 minutes et 1 heure et permettant de préparer, suivant la norme EN 196, un mortier qui présente une résistance à la compression à 5 heures supérieure à 20 MPa.

**16.** Liant selon la revendication 15, comprenant 60 % de clinker sulfoalumineux, 20 % de ciment Portland et 20 % d'une source de sulfate de calcium.

**17.** Liant selon l'une des revendications 12 à 16, **caractérisé en ce que** la source de sulfate de calcium est du gypse.

**Claims**

**1.** Sulfoaluminous clinker comprising:

   - more than 55 wt.% calcium sulfoaluminate phase ($C_4A_3S$, )
   - from 10 wt.% to 20 wt.% belite phase ($C_2S$)
   - less than 10 wt.% anhydrite (CS, )
   - less than 5 wt. % gehlenite phase ($C_2AS$),

   a free lime content less than 0.2 wt.% and an iron content (expressed as $Fe_2O_3$) less than 0.3 wt.%.

**2.** Sulfoaluminous clinker according to claim 1, **characterised in that** it comprises:

   - from 55 wt.% to 72 wt.% calcium sulfoaluminate phase ($C_4A_3S$, )
   - from 2 wt.% to 9 wt.% anhydrite (CS, ).

**3.** Clinker according to either claim 1 or claim 2, **characterised in that** its total content of coloured oxides other than iron oxide is less than 0.7 wt.%.

**4.** Process for the preparation of the clinker according to any one of claims 1 to 3, which process comprises mixing raw materials in concentrations such that the following proportions by weight of oxides are respected:

$$4 \leq S \leq 10$$

$$34 \leq A \leq 49$$

$$37 \leq C \leq 45$$

$$\text{other oxides} \leq 2$$

- the remainder to 100 being S,

and then burning the mixture at from 1250˚ to 1350˚C for a period of time that is sufficiently long to combine all the lime, followed by rapid cooling of the mixture in a non-oxidising atmosphere.

5. Process according to claim 4, **characterised in that** the mixture further has the following proportions by weight of C, A and S oxides:

$$A \leq 1.33*S + 41$$

$$A \leq -2.33*S + 62$$

$$C \leq 0.83*S + 37$$

$$C \geq 3*S + 13$$

$$C \geq -0.81*A + 72$$

$$C \leq -0.6*A + 67.$$

6. Process according to claim 4 or 5, **characterised in that** cooling is carried out by quenching with water.

7. Process according to claim 4 or 5, **characterised in that** cooling is carried out under a nitrogen atmosphere.

8. Process according to any one of claims 4 to 7, **characterised in that** the clinker is subsequently ground until a Blaine specific surface area greater than 3000 cm$^2$/g is obtained.

9. Process according to claim 8, **characterised in that** the clinker is ground until a Blaine specific surface area greater than 5000 cm$^2$/g is obtained.

10. Use of the clinker according to any one of claims 1 to 3 or obtained by the process according to any one of claims 4 to 9 in the preparation of a binder by mixing said clinker with a material that is a source of calcium oxide and/or a source of calcium sulfate.

**11.** Use according to claim 10 in the preparation of a binder by mixing said clinker with Portland cement and/or a source of calcium sulfate.

**12.** Binder comprising from 75 to 90% sulfoaluminous clinker according to any one of claims 1 to 3 or obtained by the process according to any one of claims 4 to 9, and from 25 to 10 wt.% of a source of calcium sulfate, which binder has a setting time of less than or equal to three hours and permits the preparation, according to standard EN 196, of a mortar having a 28-day compressive strength greater than or equal to 50 MPa.

**13.** Binder comprising from 20 to 40% sulfoaluminous clinker according to any one of claims 1 to 3, or obtained by the process according to any one of claims 4 to 9, from 50 to 70% Portland cement and from 5 to 25% of a source of calcium sulfate, having a setting time less than or equal to 10 minutes.

**14.** Binder according to claim 13, comprising 30% sulfoaluminous clinker, 60% Portland cement and 10% of a source of calcium sulfate.

**15.** Binder comprising from 55 to 90% sulfoaluminous clinker according to any one of claims 1 to 3, or obtained by the process according to any one of claims 4 to 9, from 5 to 30% Portland cement and from 10 to 30% of a source of calcium sulfate, having a setting time of from 30 minutes to 1 hour and permitting the preparation, according to standard EN 196, of a mortar having a 5-hour compressive strength greater than 20 MPa.

**16.** Binder according to claim 15, comprising 60% sulfoaluminous clinker, 20% Portland cement and 20% of a source of calcium sulfate.

**17.** Binder according to any one of claims 12 to 16, **characterised in that** the source of calcium sulfate is gypsum.

**Patentansprüche**

**1.** Sulfoaluminat-Klinker umfassend:

- mehr als 55 Gew.-% Calciumsulfoaluminatphase ($C_4A_3\overline{S}$)
- 10 - 20 Gew.-% Belitphase ($C_2S$)
- weniger als 10 Gew.-% Anhydrit ($C\overline{S}$)
- weniger als 5 Gew.- % Gehlenitphase ($C_2AS$),

einen Gehalt an freiem Kalk unterhalb von 0,2 Gew.-% und einen Gehalt an Eisen (ausgedrückt als $Fe_2O_3$) unterhalb von 0,3 Gew.-%.

**2.** Sulfoaluminat-Klinker gemäß Anspruch 1, **dadurch gekennzeichnet, daß** er umfaßt:

- von 55 bis 72 Gew.-% Calciumsulfoaluminatphase ($C_4A_3\overline{S}$)
- von 2 bis 9 Gew.-% Anhydrit ($C\overline{S}$).

**3.** Klinker gemäß einem der Ansprüche 1 oder 2, **dadurch gekennzeichnet, daß** sein Gesamtgehalt an farbigen Oxiden verschieden von Eisenoxid unterhalb von 0,7 Gew.-% ist.

**4.** Verfahren zur Herstellung des Klinkers gemäß einem der Ansprüche 1 bis 3, umfassend das Mischen der Ausgangsmaterialien in solchen Konzentrationen, daß die folgenden Gewichtsverhältnisse an Oxiden erfüllt werden:

$$4 \leq S \leq 10$$

$$34 \leq A \leq 49$$

$$37 \leq C \leq 45$$

$$\text{andere Oxide} \leq 2$$

- wobei der Rest auf 100 $\overline{S}$ ist, anschließend das Brennen dieser Mischung zwischen 1.250 und 1.350 ˚C während einer ausreichend langen Dauer, um allen Kalk zu kombinieren, gefolgt von einem raschen Abkühlen der Mischung in einer nicht-oxidierenden Atmosphäre.

5. Verfahren gemäß Anspruch 4, **dadurch gekennzeichnet, daß** die Mischung ferner die folgenden Gewichtsverhältnisse an Oxiden C, A und S erfüllt:

$$A \leq 1{,}33*S + 41$$

$$A \leq -2{,}33*S + 62$$

$$C \leq 0{,}83*S + 37$$

$$C \geq 3*S + 13$$

$$C \geq -0{,}81*A + 72$$

$$C \leq -0{,}6*A + 67$$

6. Verfahren gemäß Anspruch 4 oder 5, **dadurch gekennzeichnet, daß** das Abkühlen durch Abschrecken mit Wasser vorgenommen wird.

7. Verfahren gemäß Anspruch 4 oder 5, **dadurch gekennzeichnet, daß** das Abkühlen unter einer Stickstoffatmosphäre vorgenommen wird.

8. Verfahren gemäß einem der Ansprüche 4 bis 7, **dadurch gekennzeichnet, daß** der Klinker anschließend zerkleinert wird bis zum Erhalt einer spezifischen Blaine-Oberfläche oberhalb von 3.000 cm$^2$/g.

9. Verfahren gemäß Anspruch 8, **dadurch gekennzeichnet, daß** der Klinker zerkleinert wird bis zum Erhalt einer spezifischen Blaine-Oberfläche oberhalb von 5.000 cm$^2$/g.

10. Verwendung des Klinkers gemäß einem der Ansprüche 1 bis 3 oder erhalten nach dem Verfahren gemäß einem der Ansprüche 4 bis 9 zur Herstellung eines Bindemittels durch Mischen des Klinkers mit einem Ausgangsmaterial für Calciumoxid und/oder mit einer Calciumsulfat-Quelle.

11. Verwendung nach Anspruch 10 zur Herstellung eines Bindemittels durch Mischen des Klinkers mit Portland-Zement und/oder einer Calciumsulfat-Quelle.

12. Bindemittel umfassend 75 bis 90 % Sulfflaluminat-Klinker gemäß einem der Ansprüche 1 bis 3 oder erhalten nach dem Verfahren gemäß einem der Ansprüche 4 bis 9, und 25 bis 10 Gew.-% einer Calciumsulfat-Quelle, das eine Erstarrungszeit unterhalb oder gleich drei Stunden aufweist und es ermöglicht, gemäß der Norm EN 196 einen Mörtel herzustellen, der einen Kompressionswiderstand nach 28 Tagen von mehr oder gleich 50 MPa aufweist.

13. Bindemittel umfassend 20 bis 40 % Sulfoaluminat-Klinker nach einem der Ansprüche 1 bis 3 oder erhalten nach dem Verfahren nach einem der Ansprüche 4 bis 9, von 50 bis 70 % Portland-Zement und 5 bis 25 % einer Calciumsulfat-Quelle, das eine Erstarrungszeit von unterhalb oder gleich 10 Minuten aufweist.

**14.** Bindemittel gemäß Anspruch 13 umfassend 30 % Sulfoaluminat-Klinker, 60 % Portland-Zement und 10 % einer Calciumsulfat-Quelle.

**15.** Bindemittel umfassend 55 bis 90 % Sulfoaluminat-Klinker gemäß einem der Ansprüche 1 bis 3 oder erhalten nach dem Verfahren gemäß einem der Ansprüche 4 bis 9, 5 bis 30 % Portland-Zement und 10 bis 30 % einer Calciumsulfat-Quelle, das eine Erstarrungszeit zwischen 30 Minuten und einer Stunde aufweist und es ermöglicht, gemäß der Norm EN 196 einen Mörtel herzustellen, der einen Kompressionswiderstand nach 5 Stunden von mehr als 20 MPa aufweist.

**16.** Bindemittel gemäß Anspruch 15, umfassend 60 % Sulfoaluminat-Klinker, 20 % Portland-Zement und 20 % einer Calciumsulfat-Quelle.

**17.** Bindemittel gemäß einem der Ansprüche 12 bis 16, **dadurch gekennzeichnet, daß** die Calciumsulfat-Quelle Gips ist.

Fig. 1

**EP 1 306 356 B1**